# EUROPÄISCHE PATENTSCHRIFT

(11) **EP 3 140 617 B1**
(45) Veröffentlichungstag und Bekanntmachung des Hinweises auf die Patenterteilung: **16.12.2020**
(21) Anmeldenummer: 15720904.0
(22) Anmeldetag: 24.04.2015
(51) Int. Cl.: G01C 21/36

(54) **VORRICHTUNG UND VERFAHREN ZUR BEREITSTELLUNG VON INFORMATIONSDATEN ZU EINEM IN EINEM VIDEOBILDSTROM ENTHALTENEN OBJEKT EINER FAHRZEUGUMGEBUNG**
DEVICE AND METHOD FOR PROVIDING INFORMATION DATA WITH RESPECT TO AN OBJECT OF A VEHICLE ENVIRONMENT CONTAINED IN A VIDEO IMAGE STREAM
DISPOSITIF ET PROCÉDÉ POUR LA MISE À DISPOSITION DE DONNÉES D'INFORMATION D'UN OBJET CONTENU DANS UN FLUX D'IMAGES VIDÉO D'UN ENVIRONNEMENT DE VÉHICULE

(30) Priorität: 08.05.2014 DE 102014208663
(43) Veröffentlichungstag der Anmeldung: 15.03.2017
(73) Patentinhaber: Conti Temic Microelectronic GmbH, 90411 Nürnberg (DE)
(72) Erfinder: FRIEBE, Markus, 95482 Gefrees (DE)
(86) Internationale Anmeldenummer: PCT/DE2015/200279
(87) Internationale Veröffentlichungsnummer: WO 2015/169310

(56) Entgegenhaltungen:
- EP-A1- 0 867 690
- EP-A1- 1 519 154
- US-A1- 2005 182 564

## Beschreibung

Die Erfindung betrifft eine Vorrichtung und ein Verfahren zum Bereitstellen von Informationsdaten zu einem in einem Videobildstrom enthaltenen Objekt einer Fahrzeugumgebung eines Fahrzeuges, insbesondere eines Straßenfahrzeuges.

EP 0 867 690 A1 betrifft eine Vorrichtung und ein System zur Kennzeichnung von Bilddaten. Hierzu kann ein von einer Kamera bereitgestelltes Bild in mehrere Bereiche segmentiert werden. Basierend auf den Informationen über das segmentierte Bild können von einer externen Datenquelle zusätzliche Information empfangen werden und diese zusätzlichen Daten dem Kamerabild überlagert werden.

Kraftfahrzeuge, insbesondere Straßenfahrzeuge, werden zunehmend mit Fahrerassistenzsystemen ausgerüstet, die den Fahrer des Fahrzeuges beim Fahren des Fahrzeuges sowie bei Fahrmanövern unterstützen. Derartige Fahrerassistenzsysteme enthalten teilweise Kamera-Surround-View-Systeme, die über eine oder mehrere Fahrzeugkameras verfügen. Diese Fahrzeugkameras liefern Kamerabilder, welche dem Fahrer des Fahrzeuges auf einer Anzeigeeinheit des Fahrzeuges angezeigt werden. Diese Kamerabilder unterstützen beispielsweise den Fahrer beim Zurücksetzen des Fahrzeuges oder beim Einparken des Fahrzeuges in eine Parklücke.

Weiterhin verfügen herkömmliche Fahrzeuge in vielen Fällen über ein Navigationssystem, welches Positionsdaten des Fahrzeuges liefert und dem Fahrer entlang einer Fahrroute zu einem Navigationsziel führt. Dabei kann der Fahrer auf einer angezeigten Straßenkarte eine Fahrtroute verfolgen und das Fahrzeug entsprechend den Anweisungen des Navigationssystems hin zu seinem Fahrziel lenken.

Während der Fahrt zu seinem Fahrziel kommt es oft vor, dass dem Fahrer bestimmte, in der Fahrzeugumgebung befindliche Objekte, beispielsweise Gebäude oder auffällige Landmarken, auffallen, die für ihn aus verschiedensten Gründen von Interesse sind. Fährt beispielsweise ein Fahrer mit seinem Fahrzeug durch eine Stadt oder Stadtviertel oder durch einen Industriepark oder dergleichen, können ihm bestimmte Objekte, vor allem Gebäude, auffallen, zu denen er weitere Informationen wünscht. Beispielsweise möchte der Fahrer wissen, zu welchem Unternehmen ein Bürogebäude gehört. Weiterhin ist es möglich, dass ein Fahrer, der sich mit seinem Fahrzeug durch eine Stadt bewegt, historisch interessante Objekte erkennt, zu denen er gerne mehr erfahren möchte.

Bei herkömmlichen Kamera-Surround-View-Systemen bzw. Fahrerassistenzsystemen besteht für den Fahrer nicht die Möglichkeit, direkt Informationen zu den für ihn interessanten Objekte innerhalb des Videobildstromes und/oder der angezeigten Kamerabilder zu erhalten.

Es ist daher eine Aufgabe der vorliegenden Erfindung, ein Verfahren und eine Vorrichtung zu schaffen, welches dem Fahrer die Möglichkeit bietet, zu interessanten Objekten innerhalb der Fahrzeugumgebung auf einfache Weise zusätzliche Informationen zu erhalten.

Diese Aufgabe wird erfindungsgemäß durch ein Kamera-Surround-View-System mit den in Patentanspruch 1 angegebenen Merkmalen gelöst.

Weitere Ausführungsformen werden gemäß den beigefügten abhängigen Ansprüchen 2-7 bereitgestellt.

Die Erfindung schafft ferner ein Verfahren zum Bereitstellen von Informationsdaten zu einem in einem Videobildstrom enthaltenen Objekt einer Fahrzeugumgebung eines Fahrzeuges mit den in Patentanspruch 8 angegebenen Merkmalen.

Weitere Ausführungsformen werden gemäß den beigefügten abhängigen Ansprüchen 9-11 bereitgestellt.

Im Weiteren werden mögliche Ausführungsformen des erfindungsgemäßen Verfahrens und der erfindungsgemäßen Vorrichtung zur Bereitstellung von Informationsdaten zu einem in einem Videobildstrom enthaltenen Objekt einer Fahrzeugumgebung eines Fahrzeuges unter Bezugnahme auf die beigefügten Figuren näher erläutert.

Es zeigen:
- Figur 1: ein Blockschaltbild zur Darstellung eines Ausführungsbeispiels des erfindungsgemäßen Kamera-Surround-View-Systems gemäß einem ersten Aspekt der Erfindung;
- Figur 2: ein Ablaufdiagramm zur Darstellung eines Ausführungsbeispiels des erfindungsgemäßen Verfahrens zum Bereitstellen von Informationsdaten zu einem in einem Videobildstrom enthaltenen Objekt einer Fahrzeugumgebung;
- Figur 3: eine schematische Darstellung eines Anwendungsfalls zur Erläuterung der Funktionsweise des erfindungsgemäßen Verfahrens und des erfindungsgemäßen Kamera-Surround-View-Systems;
- Figur 4: eine beispielhafte Anzeige auf einer Anzeigeeinheit bei dem in Figur 3 dargestellten Anwendungsfall zur Erläuterung der Funktionsweise des erfindungsgemäßen Verfahrens und der erfindungsgemäßen Vorrichtung zur Bereitstellung von Informationsdaten.

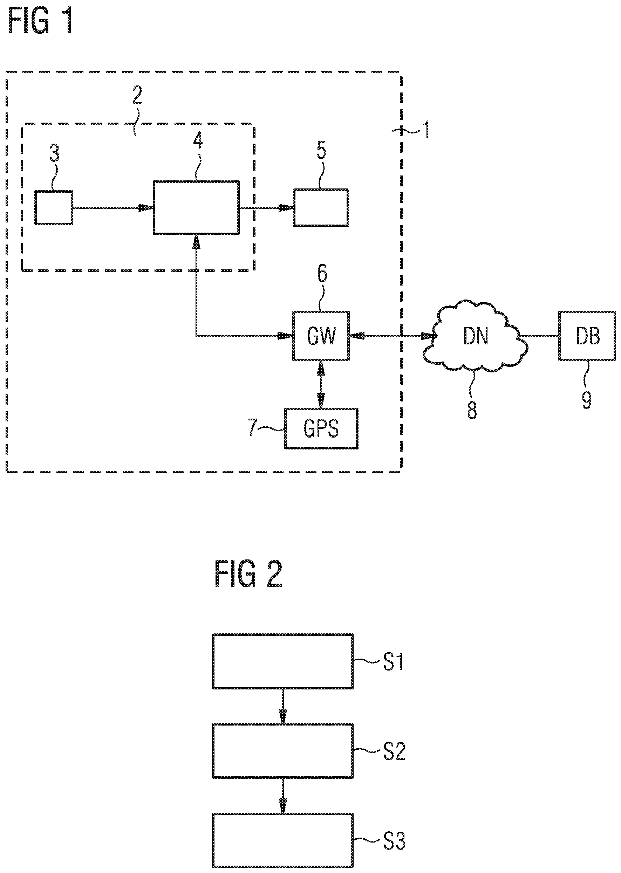

Wie man aus Figur 1 erkennen kann, verfügt bei dem dargestellten Anwendungsbeispiel ein Fahrzeug 1, insbesondere ein Straßenfahrzeug, beispielsweise ein Lkw oder Pkw, über ein Kamera-Surround-View-System 2. Das Kamera-Surround-View-System 2 enthält mindestens eine Fahrzeugkamera 3, die Kamerabilder der Fahrzeugumgebung liefert, welche durch eine Datenverarbeitungseinheit 4 des Kamera-Surround-View-Systems 2 zur Erzeugung eines Live-Videobildstromes verarbeitet werden, der auf einer Anzeigeeinheit 5 angezeigt wird. Der Live-Videobildstrom wird beispielsweise auf einem Display innerhalb des Passagierraumes dem Fahrer oder einem Passagier des Fahrzeuges 1 angezeigt. Die Datenverarbeitungseinheit 4 des Kamera-Surround-View-Systems 2 enthält bei einer möglichen Ausführungsform einen oder mehrere Mikroprozessoren zur Verarbeitung der erhaltenen Kamerabilder zu einem Live-Videobildstrom der Fahrzeugumgebung. Die Anzahl der Fahrzeugkameras 3 kann je nach Typ und Größe des Fahrzeuges 1 variieren. Beispielsweise kann ein größeres Fahrzeug 1, beispielsweise ein Lkw oder ein Kreuzfahrtschiff, eine Vielzahl von Fahrzeugkameras 3 besitzen, die durch die Datenverarbeitungseinheit 4 zu einem komplexen Live-Videobildstrom verarbeitet werden.

Die Datenverarbeitungseinheit 4 ist über Datenleitungen bzw. einem Datenbus mit einem Gateway 6 des Fahrzeuges verbunden. Bei dem Datenbus handelt es sich beispielsweise um einen Ethernet-Datenbus. Das Gateway 6 ist bei dem dargestellten Ausführungsbeispiel über einen weiteren Fahrzeugbus, beispielsweise einem CAN-Bus, mit einer GPS-Einheit 7 des Fahrzeuges verbunden, welche GPS-Koordinaten zu der aktuellen Position des Fahrzeuges 1 liefert. Die GPS-Einheit 7 kann Teil des Navigationssystems des Fahrzeuges 1 sein. Das Gateway 6 ist über eine drahtlose Schnittstelle, beispielsweise eine Mobilfunkschnittstelle, mit einem Datennetzwerk 8 verbunden. Bei der Mobilfunkschnittstelle kann es sich beispielsweise um eine UMTS-Schnittstelle handeln. Das Datennetzwerk 8 verfügt über eine oder mehrere Datenbanken 9, in der Cloud-Informationsdaten gespeichert sind. Das in Figur 1 dargestellte System kann über weitere Komponenten verfügen, beispielsweise über Datenspeicher bzw. Datenzwischenspeicher zum Speichern von temporär heruntergeladenen Cloud-Informationsdaten. Das in Figur 1 dargestellte Kamera-Surround-View-System 2 erhält lokale Cloud-Informationsdaten hinsichtlich eines in dem Live-Videobildstrom dargestellten Objektes zu dem Datennetzwerk 8 über die drahtlose Schnittstelle und das Gateway 6 und zeigt die erhaltenen lokalen Cloud-Informationsdaten als Overlay in dem auf der Anzeigeeinheit 5 angezeigten Live-Videobildstrom an. Dabei werden die lokalen Cloud-Informationsdaten von der Datenbank 9 des Datennetzwerkes 8 vorzugsweise in Abhängigkeit von einer aktuellen Position, der Fahrtrichtung und/oder der Fahrgeschwindigkeit des Fahrzeuges 1 und dem ausgewählten Objekt heruntergeladen. Die Informationen hinsichtlich der Fahrtrichtung und der Fahrgeschwindigkeit des Fahrzeuges 1 werden vorzugsweise durch weitere, nicht in Figur 1 dargestellte Sensoreinheiten des Fahrzeuges 1 geliefert.

Bei dem erfindungsgemäßen Kamera-Surround-View-System 2 wird das ausgewählte interessierende Objekt, beispielsweise ein Gebäude am Rand der Straße, von einem Fahrer des Fahrzeuges 1 oder einem in dem Fahrzeug befindlichen Passagier mittels eines Nutzerinterfaces selektiert. Bei einer möglichen bevorzugten Ausführungsform bildet das Nutzerinterface die Anzeigeeinheit 5 als Touchscreen. Bei dieser Ausführungsform wird das interessierende Objekt von dem Fahrer oder Passagier ausgewählt, indem der Fahrer oder Passagier das auf der Anzeigeeinheit 5 angezeigte Objekt berührt.

Bei dem erfindungsgemäßen Kamera-Surround-View-System 2 berechnet die Datenverarbeitungseinheit 4 des Surround-View-Systems 2 einen Pointer von Kamerakoordinaten des ausgewählten Objektes, welches innerhalb des Live-Videobildstromes auf der Anzeigeeinheit 5 angezeigt wird, zu GPS-Koordinaten und generiert anschließend eine Anforderung bzw. einen Request, welcher über die drahtlose Verbindung ausgesendet wird, um die zu dem ausgewählten Objekt zugehörigen Cloud-Informationsdaten von der Datenbank 9 des Datennetzwerkes 8 zu erhalten. Bei einer möglichen Ausführungsform erhält die Datenverarbeitungseinheit 4 des Surround-View-Systems 2 über die drahtlose Verbindung als Reaktion auf die Anfrage eine Liste von GPS-Koordinaten sowie zugehörige lokale Cloud-Informationsdaten von der Datenbank 9 des Datennetzwerkes 8 und berechnet anschließend einen Pointer von den GPS-Koordinaten zu den Kamerakoordinaten, an deren Stelle die lokalen heruntergeladenen Cloud-Informationsdaten in den angezeigten Live-Videobildstrom durch die Datenverarbeitungseinheit 4 platziert werden. Verschiedene Varianten des erfindungsgemäßen Kamera-Surround-View-Systems 2 sind möglich. Bei der in Figur 1 dargestellten Ausführungsform erfolgt das Einfügen der lokalen Cloud-Informationsdaten in den Live-Videobildstrom durch die Datenverarbeitungseinheit 4 des Kamera-Surround-View-Systems 2. Bei einer alternativen Ausführungsform erfolgt das Einfügen der Cloud-Informationsdaten in den Videobildstrom durch eine weitere separate Datenverarbeitungseinheit des Surround-View-Systems 2. Bei einer weiteren Ausführungsform kann die Datenverarbeitung auch remote durch eine Berechnungseinheit bzw. einen Server des Datennetzwerkes 8 erfolgen, wobei dieser einen Live-Videobildstrom erzeugt, in dem bereits Cloud-Informationsdaten zu ausgewählten Objekten eingefügt sind und dieser aufbereitete Videobildstrom über eine drahtlose Schnittstelle zu einer Empfangseinheit des Kamera-Surround-View-Systems 2 zurückgesendet wird.

Bei möglichen Anwendungsfällen erfolgt das Einfügen der Cloud-Informationsdaten in den Live-Videobildstrom vorzugsweise in Echtzeit mit möglichst geringer Zeitverzögerung. Bei diesen Anwendungsfällen erfolgt die Datenverarbeitung vorzugsweise durch die Datenverarbeitungseinheit 4 innerhalb des Kamera-Surround-View-Systems 2. Bei anderen Anwendungsfällen können die lokalen Cloud-Informationsdaten auch mit einer leichten Zeitverzögerung in den Live-Videobildstrom eingefügt werden, so dass in diesen Anwendungsfällen auch die Datenaufbereitung durch eine Datenverarbeitungseinheit außerhalb des Fahrzeuges 1 möglich ist.

Figur 2 zeigt ein Ablaufdiagramm zur Darstellung eines Ausführungsbeispiels des erfindungsgemäßen Verfahrens zum Bereitstellen von Informationsdaten, insbesondere Cloud-Informationsdaten, zu einem in einem Videobildstrom enthaltenen Objekt einer Fahrzeugumgebung eines Fahrzeuges.

In einem ersten Schritt S1 werden zunächst Kamerabilder von mindestens einer Fahrzeugkamera des Fahrzeuges 1 erzeugt, welche eine Fahrzeugumgebung des Fahrzeuges darstellen. Bei einer möglichen Ausführungsform verfügt das Fahrzeug über eine Vielzahl von Fahrzeugkameras, welche die gesamte Fahrzeugumgebung, d.h. 360°, um das Fahrzeug herum darstellen.

In einem weiteren Schritt S2 werden die erzeugten Kamerabilder zur Generierung eines Life-Videobildstromes der Fahrzeugumgebung verarbeitet. Diese Datenverarbeitung kann beispielsweise durch die in Figur 1 dargestellte Datenverarbeitungseinheit 4 eines Kamera-Surround-View-Systems 2 durchgeführt werden.

In einem weiteren Schritt S3 wird der generierte Live-Videobildstrom auf einer Anzeigeeinheit 5 des Fahrzeuges 1 angezeigt, wobei Cloud-Informationsdaten hinsichtlich eines ausgewählten Objektes innerhalb des Live-Videobildstromes als Overlay in dem Live-Videobildstrom angezeigt werden. Das ausgewählte interessierende Objekt wird von einem Fahrer des Fahrzeuges 1 oder einem in dem Fahrzeug 1 befindlichen Passagier mittels eines Nutzerinterfaces selektiert. Vorzugsweise wird das interessierende Objekt von dem Fahrer oder Passagier ausgewählt, indem der Fahrer oder Passagier das auf der Anzeigeeinheit 5 des Kamera-Surround-View-Systems 2 angezeigte Objekt, beispielsweise ein dargestelltes Gebäude, berührt. Die im Schritt S3 angezeigten Cloud-Informationsdaten werden vorzugsweise von einer Datenbank eines Datennetzwerkes heruntergeladen, wobei lokale Cloud-Informationsdaten, welche zu dem selektierten Objekt gehören, von dem Datennetzwerk in Abhängigkeit von einer aktuellen Position, Fahrtrichtung und/oder Fahrgeschwindigkeit des Fahrzeuges 1 in Abhängigkeit von dem ausgewählten Objekt aus einer Datenbank heruntergeladen werden. Die aktuelle Position, Fahrtrichtung und/oder Fahrgeschwindigkeit werden durch eine GPS-Einheit oder weitere Sensoreinheiten des Fahrzeuges 1 der jeweiligen Datenverarbeitungseinheit zur Verfügung gestellt. Erfindungsgemäß wird ein Pointer von Kamerakoordinaten des ausgewählten Objektes, welches sich innerhalb des Live-Videobildstromes befindet, zu GPS-Koordinaten berechnet. Anschließend wird eine Anforderung über eine drahtlose Verbindung ausgesendet, um die zu dem ausgewählten Objekt zugehörigen Cloud-Informationsdaten von der Datenbank des Datennetzwerkes erhalten. Bei einer möglichen Ausführungsform wird über die drahtlose Verbindung eine Liste von GPS-Koordinaten und zugehörigen lokalen Cloud-Informationsdaten von der Datenbank des Datennetzwerkes empfangen und anschließend ein Pointer von den GPS-Koordinaten zu den Kamerakoordinaten, an deren Stelle die lokalen Cloud-Informationsdaten in den angezeigten Live-Videobildstrom platziert werden, durch die Datenverarbeitungseinheit berechnet.

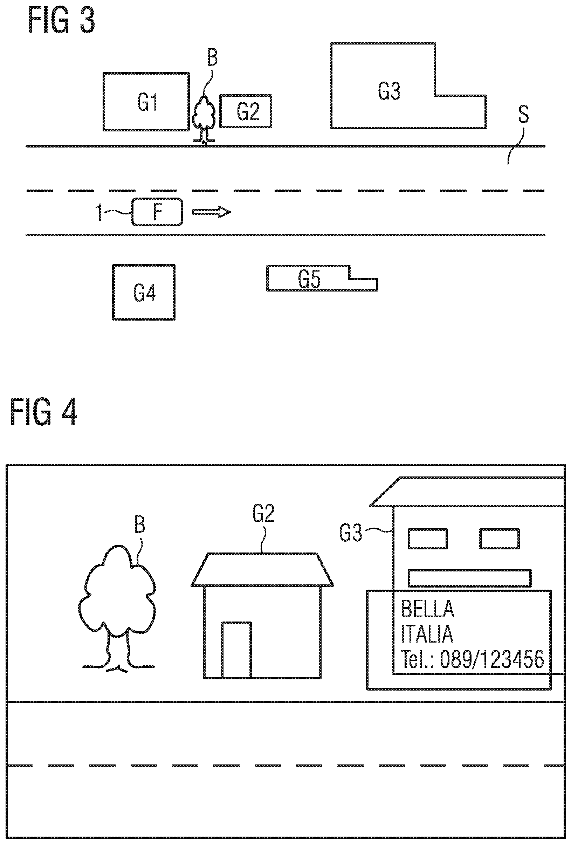

Figur 3 zeigt ein Diagramm zur Erläuterung der Funktionsweise des erfindungsgemäßen Verfahrens und der erfindungsgemäßen Vorrichtung zum Bereitstellen von Informationsdaten zu einem in einem Videobildstrom enthaltenen Objekt in einer Fahrzeugumgebung eines Fahrzeuges. Bei dem in Figur 3 dargestellten Beispiel bewegt sich ein Fahrzeug 1 auf einer Straße S innerhalb eines Stadtgebietes, wobei sich am Rand der Straße verschiedene Gebäude G1 bis G5 befinden. Bei den Gebäuden kann es sich beispielsweise um Bürogebäude, Privathäuser, öffentliche Gebäude oder historische Gebäude handeln. Neben den in Figur 3 dargestellten Gebäuden können auch weitere statische Objekte am Rand der Straße S stehen, wie beispielsweise Statuen, Monumente oder Bäume. Weitere Beispiele für statische Objekte sind Brücken oder Sportstadien und dergleichen. Fährt beispielsweise das Fahrzeug 1 an einem Gebäude mit einem Restaurant vorbei, welches dem Fahrer gefällt, kann er in dem angezeigten Live-Videobildstrom auf das angezeigte Objekt tippen bzw. den Bildschirm an dieser Stelle berühren und erhält unmittelbar Cloud-Informationsdaten zu diesem ausgewählten Objekt, d.h. zu dem ausgewählten Restaurant. Diese Informationsdaten, insbesondere Cloud-Informationsdaten, werden vorzugsweise auf dem Bildschirm in unmittelbarer Nähe zu dem ausgewählten Objekt bzw. als Overlay über dem angezeigten Objekt angezeigt.

Figur 4 zeigt schematisch eine mögliche Anzeige auf einer Anzeigeeinheit 5 des Kamera-Surround-View-Systems 2. In dem einfachen Beispiel befinden sich zwei Objekte G2, G3 auf der linken Straßenseite der Straße S, wobei sich der Fahrer des Fahrzeuges 1 für das Objekt G3 interessiert. In diesem Gebäude G3 befindet sich beispielsweise ein italienisches Restaurant, in dem der Fahrer des Fahrzeuges möglicherweise abends einen Tisch reservieren möchte. Sobald der Fahrer an einem Baum B vorbeifährt, tippt er auf das Gebäude G3 und wählt dieses als Objekt aus. Anschließend werden aus der Fahrgeschwindigkeit, der Fahrzeugposition und der Fahrtrichtung des Fahrzeuges 1 lokale Cloud-Informationsdaten zu dem Gebäude G3 aus einer Datenbank 9 eines Datennetzwerkes 8 selektiert und über eine drahtlose Schnittstelle an die Datenverarbeitungseinheit 4 des Kamera-Surround-View-Systems 2 übertragen. Die empfangenen Cloud-Informationsdaten werden an der passenden Stelle in den Live-Videobildstrom eingefügt. Der Fahrer erhält nützliche Informationsdaten, beispielsweise den Namen des italienischen Restaurants "Bella Italia" und weitere Informationen, wie beispielsweise die gewünschte Telefonnummer zur Platzreservierung "089/123456". Bei einer weiteren möglichen Ausführungsform kann der Fahrer anschließend auf ein angezeigtes Link, beispielsweise die Telefonnummer, drücken und es wird daraufhin automatisch eine Telefonverbindung zu dem angezeigten Restaurant hergestellt, sodass der Fahrer während der Fahrt in dem Fahrzeug 1 in bequemer Weise eine Reservierung bei dem Restaurant telefonisch vornehmen kann. Darüber hinaus ist es möglich, dass der Fahrer durch Betätigen von angezeigten Schaltflächen weitere spezielle Informationen hinsichtlich des interessierenden Objektes erhält. Beispielsweise kann der Fahrer bei den dargestellten Cloud-Informationsdaten auf ein Restaurant mit Menüsymbol drücken und erhält eine Menükarte des Restaurants angezeigt. Bei einer weiteren möglichen Ausführungsform kann durch Betätigen einer Schaltfläche die angezeigte Menükarte auch dem Fahrer während der Fahrt vorgelesen werden, sodass er während der Fahrt nicht abgelenkt wird. Darüber hinaus kann der Fahrer durch Betätigen einer weiteren Schaltfläche Fotos vom Inneren des Restaurants erhalten, d.h. eine angezeigte Bildergalerie.

Weitere Ausführungsvarianten sind möglich. Beispielsweise wird der Fahrer bei einer möglichen Ausführungsform durch das System auf interessante Objekte am Rand der Straße S aufmerksam gemacht, beispielsweise durch einen akustischen Hinweis. Beispielsweise kann der Fahrer des Fahrzeuges 1 an einer gewissen Stelle entlang der Fahrtroute, beispielsweise 100 m, bevor er an dem Gebäude G3 vorbeifährt, akustisch darauf aufmerksam gemacht werden, dass er in 100 m an einem italienischen Restaurant vorbeifahren wird. Der Fahrer kann beispielsweise durch Berühren des Bildschirms bzw. der Anzeigeeinheit 5 das angekündigte Objekt auswählen. Bei einer weiteren möglichen Ausführungsvariante kann der Fahrer die akustische Anfrage mit einem Befehlswort bestätigen, sodass Cloud-Informationsdaten zu dem interessierenden Objekt automatisch heruntergeladen werden, ohne dass der Fahrer die Anzeigeeinheit 5 berühren muss. Bei dieser Ausführungsvariante ist nicht notwendig, dass das interessierende Objekt, beispielsweise das Restaurant, zum Zeitpunkt der Selektion bereits dem Fahrer auf der Anzeigeeinheit 5 angezeigt wird. Mit dem erfindungsgemäßen System wird das interessierende Objekt, beispielsweise das in Figur 4 dargestellte Restaurant, von einem Fahrer des Fahrzeuges 1 oder einem in dem Fahrzeug befindlichen Passagier mittels eines Nutzerinterfaces selektiert. Bei einer möglichen Ausführungsform weist dieses Nutzerinterface ein Mikrofon auf, in welches der Fahrer akustische Befehle zum Auswählen des Objektes eingibt. Alternativ kann als Nutzerinterface die Anzeigeeinheit 5 als Touchscreen dienen. Benutzt das Nutzerinterface die Anzeigeeinheit 5 als Touchscreen, erfolgt die Auswahl des Objektes aus den in dem Live-Videobildstrom aktuell angezeigten Objekten. Weiterhin ist es möglich, dass auch Objekte ausgewählt werden, die aktuell noch nicht angezeigt werden, jedoch zukünftig nach Fahren einer kurzen Strecke angezeigt werden. Dieses Beispiel bietet den Vorteil, dass die zu den ausgewählten Objekten zugehörigen lokalen Cloud-Informationsdaten von einer entfernten Datenbank heruntergeladen werden können und zum Zeitpunkt des Passierens des interessierenden Objektes bereits zur Verfügung stehen.

Bei einer möglichen weiteren Ausführungsvariante des erfindungsgemäßen Systems kann der Fahrer verschiedene Typen von Objekten auswählen bzw. filtern. Beispielsweise kann der Fahrer Restaurants, Tankstellen oder Reparaturwerkstätten als Objekttyp auswählen. In diesem Falle wird der Fahrer bei einer möglichen Ausführungsform lediglich auf Objekte aufmerksam gemacht, welche dem ausgewählten Objekttyp entsprechen. Fährt beispielsweise ein Fahrer durch eine ihm unbekannte Stadt und sucht er ein für ihn passendes Restaurant, kann er gezielt nach Objekten des Objekttyps Restaurant suchen. Sobald sich das Fahrzeug dem Objekt dieses Objekttyps nähert oder passiert, kann er dieses Objekt auswählen und die zugehörigen Cloud-Informationsdaten lesen, um seine Auswahl zu treffen.

Bei einer weiteren möglichen Ausführungsvariante verfügt das erfindungsgemäße System über einen Editor, bei dem der Fahrer Cloud-Informationsdaten zu einem interessierenden Objekt erzeugen kann, wobei die erzeugten Cloud-Informationsdaten durch den Fahrer von einer Datenbank 9 des Datennetzwerkes 8 hochgeladen werden. Beispielsweise kann ein Fahrer nach dem Essen in dem ausgewählten Restaurant seine Bewertung des Restaurants abgeben, die als zusätzliche Cloud-Informationsdaten in der Datenbank 9 des Datennetzwerkes 8 abgelegt werden können.

Das erfindungsgemäße System ist vielfältig einsetzbar. Beispielsweise kann das Fahrzeug 1 über eine Vielzahl von Anzeigeeinheiten 5 verfügen, die für verschiedene Passagiere des Fahrzeuges 1 vorgesehen sind. Beispielsweise kann ein Touristenbus innerhalb einer Stadtrundfahrt mit einer Vielzahl von Anzeigeeinheiten 5 ausgestattet sein, die den Fahrzeugpassagieren, d.h. den Touristen, einen Live-Videobildstrom der Fahrzeugumgebung zeigen. Interessiert sich beispielsweise ein Tourist während der Stadtrundfahrt für ein besonderes Gebäude, das er durch das Fenster das Fahrbusses sieht, kann er gleichzeitig das auf der Anzeigeeinheit 5 ebenfalls dargestellte Gebäude durch Berühren des Bildschirms auswählen und erhält zugehörige Cloud-Informationsdaten zu diesem Gebäude. Auf diese Weise können eine Vielzahl von Touristen gleichzeitig über unterschiedliche sie individuell interessierende Objekte Informationen erhalten. Bei einer weiteren möglichen Ausführungsvariante handelt es sich bei der Anzeigeeinheit 5 um ein Headup-Display. Bei dieser Ausführungsvariante kann der Fahrer oder ein Passagier des Fahrzeuges ein durch eine Fensterscheibe des Fahrzeuges sichtbares Objekt auswählen, indem er das sichtbare Objekt auf der Fensterscheibe des Fahrzeuges berührt. Bei dieser Ausführungsvariante dient somit das Headup-Display bzw. die Fensterscheibe das Nutzerinterface zum Auswählen des Objektes. Bei dem in Figur 1 dargestellten Datennetzwerk 8 handelt es sich vorzugsweise um einen Datennetzwerkverbund, insbesondere das Internet. Bei einer möglichen Ausführungsform kommuniziert das Gateway 6 des Fahrzeuges 1 über eine drahtlose Schnittstelle, insbesondere eine Mobilfunkschnittstelle, mit einem Zugangspunkt eines Zugangsnetzwerkes, welches seinerseits mit dem Internet verbunden ist. Bei einer weiteren möglichen Ausführungsvariante erhält das System Positionsdaten von weiteren Signalquellen, beispielsweise via Satellit oder mittels Odometrie. Bei einer möglichen Ausführungsform wird auf der Anzeigeeinheit 5 ein dreidimensionales Anzeigenbild der Fahrzeugumgebung angezeigt. Bei dieser Ausführungsform werden auch die Objekte dreidimensional angezeigt und können durch den Fahrer durch Berühren des Bildschirms ausgewählt werden.

Bei einer weiteren möglichen Ausführungsvariante werden die geladenen lokalen Cloud-Informationsdaten zu den ausgewählten Objekten auf einem lokalen Datenspeicher des Systems gespeichert, sodass sie beim nächsten Auswählen des Objektes bereits lokal in dem lokalen Datenspeicher des Fahrzeuges zur Verfügung stehen. Hierdurch werden die Zugriffszeiten auf die Cloud-Informationsdaten bereits ausgewählter Objekte minimiert.

Auf Basis der gelieferten aus der Cloud stammenden GPS-Daten, der Position des Fahrzeuges und dem Blickwinkel der virtuellen Kamera wird vorzugsweise durch die Datenverarbeitungseinheit 4 der Darstellungsort der Overlay-Daten auf dem Display bzw. der Anzeigeeinheit 5 berechnet. Die Berechnung erfolgt dabei vorzugsweise in Echtzeit.

## Patentansprüche

1. Kamera-Surround-View-System (2) für ein Fahrzeug (1) mit mindestens einer Fahrzeugkamera (3), die Kamerabilder liefert, welche durch eine Datenverarbeitungseinheit (4) zur Erzeugung eines Live-Videobildstromes verarbeitet werden, der auf einer Anzeigeeinheit (5) angezeigt wird, wobei das Kamera-Surround-View-System (2) lokale Cloud-Informationsdaten hinsichtlich eines in dem Live-Videobildstrom dargestellten Objektes von einem Datennetzwerk (8) lädt und die erhaltenen lokalen Cloud-Informationsdaten als Overlay in dem angezeigten Live-Videobildstrom anzeigt,
wobei ein ausgewähltes interessierendes Objekt von einem Fahrer des Fahrzeuges (1) oder einem in dem Fahrzeug (1) befindlichen Passagier mittels eines Nutzerinterfaces selektiert wird,
wobei das Kamera-Surround-View-System (2) einen Pointer von Kamerakoordinaten des ausgewählten Objektes, welches sich innerhalb des Live-Videobildstromes befindet, zu GPS-Koordinaten des ausgewählten Objektes berechnet und eine Anforderung über die drahtlose Verbindung sendet, um die zu dem Objekt zugehörigen Cloud-Informationsdaten von einer Datenbank (9) des Datennetzwerkes (8) zu erhalten, und
wobei die lokalen Cloud-Informationen über eine drahtlose Schnittstelle und ein Gateway (6) heruntergeladen werden, wobei das Gateway (6) über einen Datenbus mit der Datenverarbeitungseinheit (4) und mit einem weiteren Fahrzeugbus mit einer GPS-Einheit (7) des Fahrzeugs verbunden ist, und wobei die heruntergeladenen Cloud-Informationen in einem Datenspeicher temporär zwischengespeichert werden.

2. Kamera-Surround-View-System nach Anspruch 1,
wobei die lokalen Cloud-Informationsdaten von dem Datennetzwerk in Abhängigkeit von einer aktuellen Position, Fahrtrichtung und/oder Fahrgeschwindigkeit des Fahrzeuges (1) und dem ausgewählten Objekt herunterladbar sind.

3. Kamera-Surround-View-System nach Anspruch 1 oder 2,
wobei das ausgewählte Objekt von dem Fahrer oder Passagier ausgewählt wird, indem der Fahrer oder Passagier das auf der Anzeigeeinheit (5) angezeigte Objekt berührt.

4. Kamera-Surround-View-System nach einem der vorangehenden Ansprüche 1 bis 3,
wobei das Kamera-Surround-View-System (2) mit dem Gateway (6) verbunden ist, das eine drahtlose Verbindung zu dem Datennetzwerk (8) bereitstellt.

5. Kamera-Surround-View-System nach einem der vorangehenden Ansprüche 1 bis 4,
wobei die aktuelle Position, Fahrtrichtung und/oder Fahrgeschwindigkeit durch die GPS-Einheit (7) des Fahrzeuges (1) bereitgestellt werden.

6. Kamera-Surround-View-System nach einem der Ansprüche 1 bis 5,
wobei das Kamera-Surround-View-System (2) über die drahtlose Verbindung eine Liste von GPS-Koordinaten und zugehörige lokale Cloud-Informationsdaten von der Datenbank (9) des Datennetzwerkes (8) erhält und einen Pointer von den GPS-Koordinaten zu den Kamerakoordinaten, an deren Stelle die lokalen Cloud-Informationsdaten in den angezeigten Live-Videobildstrom platziert werden, berechnet.

7. Fahrerassistenzsystem mit einem Kamera-Surround-View-System (2) nach einem der vorangehenden Ansprüche 1 bis 6.

8. Verfahren zum Bereitstellen von Informationsdaten zu einem in einem Videobildstrom enthaltenen Objekt einer Fahrzeugumgebung eines Fahrzeuges (1) mit den Schritten:
(a) Erzeugen (S1) von Kamerabildern der Fahrzeugumgebung durch mindestens eine Fahrzeugkamera des Fahrzeuges;
(b) Verarbeiten (S2) der erzeugten Kamerabilder zur Generierung eines Live-Videobildstromes der Fahrzeugumgebung;
(c) Anzeigen (S3) des generierten Live-Videobildstromes auf einer Anzeigeeinheit des Fahrzeuges,
wobei ein ausgewähltes interessierendes Objekt von einem Fahrer des Fahrzeuges (1) oder einem in dem Fahrzeug (1) befindlichen Passagier mittels eines Nutzerinterfaces selektiert wird,
wobei Cloud-Informationsdaten hinsichtlich des ausgewählten Objektes innerhalb des Live-Videobildstromes als Overlay in dem Live-Videobildstrom angezeigt werden, wobei ein Pointer von Kamerakoordinaten des ausgewählten Objektes, welches sich innerhalb des Live-Videobildstromes befindet, zu GPS-Koordinaten des ausgewählten Objektes berechnet wird und eine Anforderung über eine drahtlose Verbindung ausgesendet wird, um die zu dem Objekt zugehörigen Cloud-Informationsdaten von einer Datenbank des Datennetzwerkes zu erhalten, und
wobei die lokalen Cloud-Informationen über eine drahtlose Schnittstelle und ein Gateway (6)heruntergeladen werden, wobei das Gateway (6) über einen Datenbus mit der Datenverarbeitungseinheit (4) und mit einem weiteren Fahrzeugbus mit einer GPS-Einheit (7) des Fahrzeugs verbunden ist, und wobei die heruntergeladenen Cloud-Informationen in einem Datenspeicher temporär zwischengespeichert werden.

9. Verfahren nach Anspruch 8,
wobei lokale Cloud-Informationsdaten von einem Datennetzwerk in Abhängigkeit von einer aktuellen Position, Fahrtrichtung und/oder Fahrgeschwindigkeit des Fahrzeuges und dem ausgewählten Objekt heruntergeladen werden.

10. Verfahren nach Anspruch 8 oder 9,
wobei das ausgewählte Objekt von dem Fahrer oder Passagier ausgewählt wird, indem der Fahrer oder Passagier das auf der Anzeige angezeigte Objekt berührt.

11. Verfahren nach einem der Ansprüche 8 bis 10,
wobei über die drahtlose Verbindung eine Liste von GPS-Koordinaten und zugehörige lokale Cloud-Informationsdaten von der Datenbank des Datennetzwerkes übertragen werden und ein Pointer von den GPS-Koordinaten zu den Kamerakoordinaten, an deren Stelle die lokalen Cloud-Informationsdaten in den angezeigten Live-Videobildstrom platziert werden, berechnet wird.

## Claims

1. A camera surround view system (2) for a vehicle (1) having at least one vehicle camera (3), which provides camera images which are processed by a data processing unit (4) in order to produce a live video image stream which is displayed on a display unit (5), wherein the camera surround view system (2) loads local cloud information data regarding an object shown in the live video image stream from a data network (8) and displays the received local cloud information data as an overlay in the displayed live video image stream,
wherein a selected object of interest is selected by a driver of the vehicle (1) or a passenger located in the vehicle (1) by means of a user interface,
wherein the camera surround view system (2) calculates a pointer from camera coordinates of the selected object, which is in the live video image stream, to GPS coordinates of the selected object and sends a request via the wireless connection, in order to receive the cloud information data associated with the object from a database (9) of the data network (8), and wherein the local cloud information is downloaded over a wireless interface and a gateway (6), wherein the gateway (6) is connected via a data bus to the data processing unit (4) and to a further vehicle bus having a GPS unit (7) of the vehicle, and wherein the downloaded cloud information is temporarily stored in a data memory.

2. The camera surround view system according to Claim 1,
wherein the local cloud information data can be downloaded from the data network as a function of a current position, direction of travel, and/or speed of travel of the vehicle (1) and the selected object.

3. The camera surround view system according to Claim 1 or 2,
wherein the selected object is selected by the driver or passenger, by the driver or passenger touching the object displayed on the display unit (5).

4. The camera surround view system according to any one of the preceding Claims 1 to 3,
wherein the camera surround view system (2) is connected to the gateway (6) which provides a wireless connection to the data network (8).

5. The camera surround view system according to any one of the preceding Claims 1 to 4,
wherein the current position, direction of travel, and/or speed of travel are provided by the GPS unit (7) of the vehicle (1).

6. The camera surround view system according to any one of Claims 1 to 5,
wherein the camera surround view system (2) receives a list of GPS coordinates and associated local cloud information data from the database (9) of the data network (8) via the wireless connection and calculates a pointer from the GPS coordinates to the camera coordinates, at the position of which the local cloud information data are placed in the displayed live video image stream.

7. A driver assistance system having a camera surround view system (2) according to any one of the preceding Claims 1 to 6.

8. A method for providing information data with respect to an object of a vehicle environment of a vehicle (1) contained in a video image stream having the steps of:
(a) producing (S1) camera images of the vehicle surroundings with at least one vehicle camera of the vehicle;
(b) processing (S2) the produced camera images to generate a live video image stream of the vehicle surroundings;
(c) displaying (S3) the generated live video image stream on a display unit of the vehicle,
wherein a selected object of interest is selected by a driver of the vehicle (1) or a passenger located in the vehicle (1) by means of a user interface,
wherein cloud information data regarding the selected object in the live video image stream are displayed as an overlay in the live video image stream, wherein a pointer is calculated from camera coordinates of the selected object, which is in the live video image stream, to GPS coordinates of the selected object, and a request is sent via a wireless connection, in order to receive the cloud information data associated with the object from a database of the data network, and
wherein the local cloud information is downloaded over a wireless interface and a gateway (6), wherein the gateway (6) is connected via a data bus to the data processing unit (4) and to a further vehicle bus having a GPS unit (7) of the vehicle, and wherein the downloaded cloud information is temporarily stored in a data memory.

9. The method according to Claim 8,
wherein local cloud information data are downloaded from a data network as a function of a current position, direction of travel, and/or speed of travel of the vehicle and the selected obj ect.

10. The method according to Claim 8 or 9,
wherein the selected object is selected by the driver or passenger, by the driver or passenger touching the object displayed on the display.

11. The method according to any one of Claims 8 to 10,
wherein a list of GPS coordinates and associated local cloud information data are transmitted via the wireless connection from the database of the data network and a pointer is calculated from the GPS coordinates to the camera coordinates, at the position of which the local cloud information data are placed in the displayed live video image stream.

## Revendications

1. Système de vue panoramique de caméra (2) pour un véhicule (1) avec au moins une caméra de véhicule (3) qui fournit des images de caméra, lesquelles sont traitées par une unité de traitement de données (4) pour la production d'un flux d'images vidéo en temps réel, lequel est affiché sur une unité d'affichage (5), le système de vue panoramique de caméra (2) chargeant, à partir d'un réseau de données (8), des données d'informations de nuage locales relativement à un objet représenté dans le flux d'images vidéo en temps réel et affichant les données d'informations de nuage locales obtenues comme superposition dans le flux d'images vidéo en temps réel affiché,
un objet d'intérêt sélectionné étant choisi au moyen d'une interface utilisateur, par un conducteur du véhicule (1) ou par un passager se trouvant dans le véhicule (1),
le système de vue panoramique de caméra (2) convertissant un pointeur de coordonnées de caméra de l'objet sélectionné, lequel se trouve dans le flux d'images vidéo en temps réel, en coordonnées GPS de l'objet sélectionné et envoyant une demande par la liaison sans fil afin d'obtenir les données d'informations de nuage associées à l'objet d'une base de données (9) du réseau de données (8), et
les informations de nuage locales étant téléchargées par le biais d'une interface sans fil et d'une passerelle (6), la passerelle (6) étant reliée par le biais d'un bus de données avec l'unité de traitement de données (4) et avec un bus de véhicule supplémentaire avec une unité GPS (7) du véhicule, et les informations de nuage téléchargées étant enregistrées temporairement dans une mémoire de données.

2. Système de vue panoramique de caméra selon la revendication 1,
les données d'informations de nuage locales étant téléchargeables à partir du réseau de données en fonction d'une position, d'une direction de déplacement et/ou d'une vitesse de déplacement actuelles du véhicule (1) et en fonction de l'objet sélectionné.

3. Système de vue panoramique de caméra selon la revendication 1 ou 2,
l'objet sélectionné étant sélectionné par le conducteur ou par le passager par le fait que le conducteur ou le passager touche l'objet affiché sur l'unité d'affichage (5) .

4. Système de vue panoramique de caméra selon l'une des revendications précédentes 1 à 3,
le système de vue panoramique de caméra (2) étant relié avec la passerelle (6), laquelle met à disposition une liaison sans fil avec le réseau de données (8).

5. Système de vue panoramique de caméra selon l'une des revendications précédentes 1 à 4,
la position, la direction de déplacement et/ou la vitesse de déplacement actuelles étant mises à disposition par l'unité GPS (7) du véhicule (1).

6. Système de vue panoramique de caméra selon l'une des revendications 1 à 5,
le système de vue panoramique de caméra (2) obtenant, de la base de données (9) du réseau de données (8), une liste de coordonnées GPS et des données d'informations de nuage locales associées par le biais de la liaison sans fil, et convertissant un pointeur des coordonnées GPS en coordonnées de caméra, à l'emplacement desquelles les données d'informations de nuage locales sont placées dans le flux d'images vidéo en temps réel affiché.

7. Système d'aide à la conduite avec un système de vue panoramique de caméra (2) selon l'une des revendications précédentes 1 à 6.

8. Procédé pour la mise à disposition de données d'informations sur un objet contenu dans un flux d'images vidéo d'un environnement de véhicule d'un véhicule (1) avec les étapes :
(a) génération (S1) d'images de caméra de l'environnement de véhicule par l'au moins une caméra de véhicule du véhicule ;
(b) traitement (S2) des images de caméra générées pour la génération d'un flux d'images vidéo en temps réel de l'environnement de véhicule ;
(c) affichage (S3) du flux d'images vidéo en temps réel sur une unité d'affichage du véhicule,
un objet d'intérêt sélectionné étant choisi au moyen d'une interface utilisateur par un conducteur du véhicule (1) ou par un passager se trouvant dans le véhicule (1),
des données d'informations de nuage relatives à l'objet sélectionné dans le flux d'images vidéo en temps réel étant affichées comme superposition dans le flux d'images vidéo en temps réel, un pointeur de coordonnées de caméra de l'objet sélectionné, lequel se trouve dans le flux d'images vidéo en temps réel, étant converti en coordonnées GPS de l'objet sélectionné et une demande étant envoyée par le biais d'une liaison sans fil afin d'obtenir les données d'informations de nuage associées à l'objet d'une base de données du réseau de données, et
les informations de nuage locales étant téléchargées par le biais d'une interface sans fil et d'une passerelle (6), la passerelle (6) étant reliée par le biais d'un bus de données avec l'unité de traitement de données (4) et avec un bus de véhicule supplémentaire avec une unité GPS (7) du véhicule, et les informations de nuage téléchargées étant enregistrées temporairement dans une mémoire de données.

9. Procédé selon la revendication 8,
des données d'informations de nuage locales étant téléchargées à partir du réseau de données en fonction d'une position, d'une direction de déplacement et/ou d'une vitesse de déplacement actuelles du véhicule et en fonction de l'objet sélectionné.

10. Procédé selon la revendication 8 ou 9,
l'objet sélectionné étant sélectionné par le conducteur ou par le passager par le fait que le conducteur ou le passager touche l'objet affiché sur l'affichage.

11. Procédé selon l'une des revendications 8 à 10,
une liste de coordonnées GPS et des données d'informations de nuage locales associées étant transmises de la base de données du réseau de données par le biais de la liaison sans fil, et un pointeur des coordonnées GPS étant converti en coordonnées de caméra à l'emplacement desquelles les données d'informations de nuage locales sont placées dans le flux d'images vidéo en temps réel affiché.
